(19) Europäisches Patentamt
European Patent Office
Office européen des brevets

(11) **EP 2 536 096 A1**

(12) **EUROPEAN PATENT APPLICATION**

(43) Date of publication:
**19.12.2012 Bulletin 2012/51**

(51) Int Cl.:
***H04L 29/06*** *(2006.01)*

(21) Application number: **11170324.5**

(22) Date of filing: **17.06.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ABB Research Ltd.
8050 Zürich (CH)**

(72) Inventors:
• **Obermeier, Sebastian
5107 Schinznach-Dorf (CH)**

• **Hadeli, Hadeli
5400 Baden (CH)**
• **Schierholz, Ragnar
5436 Würenlos (CH)**
• **Hristova, Ana
5400 Baden (CH)**

(74) Representative: **ABB Patent Attorneys
C/o ABB Schweiz AG
Intellectual Property CH-IP
Brown Boveri Strasse 6
5400 Baden (CH)**

(54) **Securing an industrial control system**

(57) A new single password which may be valid for all control devices 20 of an industrial control system 10 may be entered by a user. After that, for each control device 20 the password is combined with a respective control device identifier, hashed and sent to the respective control device 20, which stores its specific hash value.

Fig. 1

**Description**

FIELD OF THE INVENTION

The invention relates to a method for securing an industrial control system and an industrial control system.

BACKGROUND OF THE INVENTION

Nowadays, many control devices of an industrial control system, for example the control devices of an electrical substation, are not stand-alone devices but are connected to a communication network. For example, the control devices may be remotely configured and monitored via the communication network.

However, this may open the possibility that unauthorized persons illegally try to gain control over the devices. To prevent this, usually user authentication and user authorization is included into the communication between the devices and a remotes system that tries to connect to the devices over the communication network.

There are several challenges when applying a user authentication and authorization policy in industrial control systems environment. Particularly, when a device must authenticate a user based on the user's password, the following challenges may occur:

> There should be no dependency on an additional server. The user access should not be dependent on an additional server, which can be considered as another potential point of failure and as well additional cost (for example, purchasing, operating and maintaining) to the customer.

The password should be maintainable. If a user would have to memorize a different password for every device in the system, then he will probably either write down the passwords or use a very weak password.

The storage of the device may have to be theft-resistance. When a device is stolen or compromised, the device should not be easily reverse engineered in order to obtain the password that allows access to another device. Some embedded devices are used in unmanned locations. The likelihood of a combined cyber and physical attack is higher in an unmanned station (e.g. the attacker physically breaks into a substation and steals a device, which he then can hack into more easily to gain access to system wide passwords, thereby compromising the remaining system). Therefore, if a device is stolen, it should neither reveal information about the user passwords, nor should it allow an adversary to access other devices within the system.

Furthermore, a device may be susceptible to hacking. In this scenario, an adversary modifies the device or installs a malicious component in the device which makes the device collect remote user passwords and makes the collected remote passwords available to the adversary. The adversary will then use these passwords to access other devices in the system.

To store and to transfer passwords over a communication network it is known to hash these passwords, such that the plain password cannot be stolen from a storage of from a communication link. Current authentication solutions (for example Windows and Linux) store the hash value of the password and then use the password hash for authentication. This solution, however, may have problems when applied to an embedded device. If the user submits the hash value to the device, the functionality of the hash value corresponds to the plain-text password, i.e., a stolen device can be used to extract the hash value. With modified log-in software, an illegal user does not have to enter the password anymore, but may use the hash value directly. If, as a second option, the embedded device itself would require as input the plain-text password and then calculate the hash value directly on the device, this would allow a compromised device to learn the clear-text password.

DESCRIPTION OF THE INVENTION

It is an object of the invention to provide an industrial control system more secure with respect to software attacks.

This objective is achieved by the subject-matter of the independent claims. Further exemplary embodiments are evident from the dependent claims and the following description.

A first aspect of the invention relates to a method for securing an industrial control system. The industrial control system comprises a plurality of control devices interconnected by a communication network. In order to remotely change a password, the method comprises the steps of: Receiving a new password entered into a password change module connected to the communication network; determining a control device identifier for each control device of the plurality of control devices; combining the new password and the control device identifier to a device specific password; hashing the device specific password at least one time to generate a hash value; sending the hash value to the control device over the communication network; and storing the hash value in the control device.

In other words, a new single password valid for all control devices of an industrial control system may be entered by a user. After that, for each control device, the password is combined with a respective control device identifier, hashed and sent to the respective control device, which stores its specific hash value.

The new password may be a remote password, i.e. a password that may be entered remotely from the respective control device, or a local password, i.e. a password that may be entered locally into the respective control device, for example via a human-machine interaction interface (HMI).

With the method as described as above and in the following, a password based user authentication service for control devices, which may also be called embedded devices, of an industrial control system is provided. It may be based on two passwords, one for remote access over a remote device, and one for local access over a local HMI. Although, the remote access password is individual for each device and thus characterized by being resistant against device theft, a stolen device does not contain sensitive information that allows a thief to easily access other devices of the system. The user has to remember only a single remote access password. The local password, however, can be short as it allows only access when the user is in front of the device.

A further aspect of the invention relates to an industrial control system. The industrial control system comprises a remote system and a plurality of control devices. Each of the control devices is interconnected with the remote system by a communication network. The industrial control system is adapted to execute the method as described in the above and in the following.

It has to be understood that features of the method as described in the above and in the following may be features of the system as described in the above and in the following and vice versa.

A further aspect of the invention relates to a program element (i.e. a computer program) for securing an industrial control system, which, when being executed by at least one processor, is adapted to carry out the steps of the method as described in the above and in the following. For example, the remote system and the control devices may comprise processors which execute the program element.

A further aspect of the invention relates to a computer-readable medium for securing an industrial control system, in which such a program element is stored. A computer-readable medium may be a floppy disk, a hard disk, an USB (Universal Serial Bus) storage device, a RAM (Random Access Memory), a ROM (Read Only memory) and an EPROM (Erasable Programmable Read Only Memory). A computer readable medium may also be a data communication network, e.g. the Internet, which allows downloading a program code.

These and other aspects of the invention will be apparent from and elucidated with reference to the embodiments described hereinafter.

BRIEF DESCRIPTION OF THE DRAWINGS

The subject matter of the invention will be explained in more detail in the following text with reference to exemplary embodiments which are illustrated in the attached drawings.

Fig. 1 schematically shows an industrial control system according to an embodiment of the invention.

Fig. 2 shows a flow diagram of a method for remotely changing a password according to an embodiment of the invention.

Fig. 3 shows a flow diagram of a method for remotely accessing a control device according to an embodiment of the invention.

Fig. 4 shows a flow diagram of a method for locally accessing a control device according to an embodiment of the invention.

In principle, identical parts are provided with the same reference symbols in the figures.

DETAILED DESCRIPTION OF EXEMPLARY EMBODIMENTS

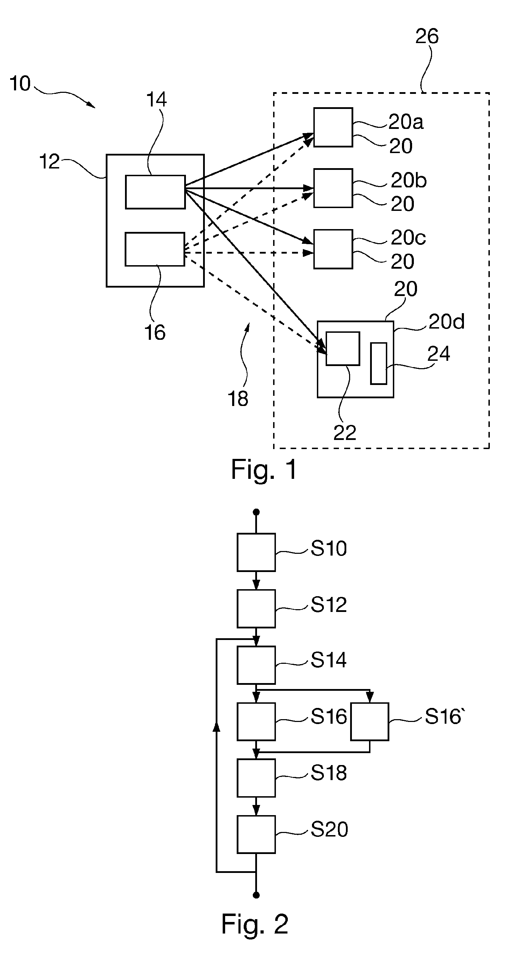

Fig. 1 shows schematically shows an industrial control system 10 with a remote system 12 and a plurality of control devices 20a, 20b, 20c, 20d. Each of the control devices 20a, 20b, 20c, 20d, is interconnected with the remote system 12 by a communication network 18. Note that the remote system 12 need not be part of the industrial control system 10. The remote system 12 may be a single device 12, for example a computer 12, or a remote configuration and/or parameterization system 12 that may be supported by personal computer tools.

The remote system 12 may be interconnected with the devices 20a, 20b, 20c, 20d only if the re-configuration/parameterization (i.e. the execution of the method as described in the above and in the below) is required. Otherwise, the remote system 12 used to reconfigure the devices 20a, 20b, 20c, 20d, may also be shutdown.

The devices 20a, 20b, 20c, 20d may be control devices of an electrical substation 26.

The remote system 12 comprises a password change module 14 and an access module 16. The password change module 14 may be a software component that is used for adding or modifying the password of a current and new user. The module 14 may also take as input the user name to which the new password belongs to. The access module 16 may be a software component that may take a user name, a user password and a control device name, may process these and sends it to the respective control device for authentication.

It has to be understood that only one of the modules 14, 16 may be installed on the remote system 12 or that both modules may be implemented as one software component.

In the following the control devices 20a, 20b, 20c, 20d also will be designated with reference numeral 20.

Each of the control devices 20 comprises an authentication module 22. Furthermore, it is possible that some of the control devices 20 comprise a human machine interface (HMI) 24. The HMI 24 may be used for entering a local password. For example, the device 20c may have no local HMI 24, thus, it may not need a local password.

The control devices 20 comprise identifiers which may be unique with respect to the control devices of the industrial control system 10. For example, the identifier of the control device 20a is E1Q1QA1, of 20b is E1Q1QA2, and of 20c is E1Q1QA3. While this example uses logical names (i.e. names on the application level), the device identifiers could just as well be derived according to different approaches (e.g. the serial number or the IP address of the control device 20). The identifier may only be unique for every device and known to all components.

Furthermore, the control devices 20 may comprise device names which may be entered by a user for identifying the control device. For example, the device name may comprise its installation position or a telling name that can be remembered by a user. The device names also may be unique with respect to the industrial control system 10.

Fig. 2 shows a flow diagram of a method for remotely changing a password.

In step S10 a user enters a username and a new password into the remote system 12. The password change module 14 receives the username and the new password entered into the password change module 14. It has to be noted, that usually the user enters an additional password for logging into the computer 12.

Summarized, according to an embodiment of the invention, a password and/or a username is received by the password change module 14, wherein the password and/or the username may be entered into the password change module by a user.

In step S12 the password change module reads device identifiers for the devices 20. For example, the identifiers may be stored in a table in the password change module 14. The device identifier may be taken from a standardized configuration description of the remote system 12, such as the SCD of an SA system. In particular, the password change module determines a control device identifier for each control device 20 of the plurality of control devices of the industrial control system.

For example, the password change module may determine the identifiers E1Q1QA1, s E1Q1QA2, and E1Q1QA3 for the devices 20a, 20b, 20c.

The following steps S14 to S18 are performed for each control device 20 of the industrial control system 10.

In step S14, the password change module 14 concatenates the new password and the device identifier of the device 20. The new password and the control device identifier are combined into a device specific password. In particular, according to an embodiment of the invention, the new password and the control device identifier are combined by concatenating the password and the control device identifier.

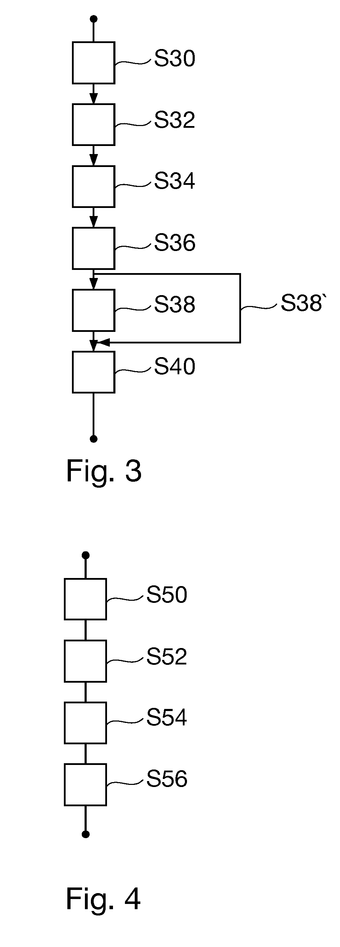

In step S16, the device specific password is hashed twice by the password change module 14 to generate a (device specific) hash value. Alternatively in step S16', according to a variant of the invention, the device specific password is hashed only one time. The step S16 may be performed in industrial control systems, in which the control devices 20 may be reprogrammed. With respect to Fig. 3, it will be explained how these control devices may process a hash value in a more secure way as legacy devices, which may not be reprogrammed. Additionally, the variant with step S16' may be used while changing a local password for the devices 20 (see below).

Summarized, in steps S16 or S16', according to an embodiment of the invention, the device specific password is at least hashed one time to generate a hash value.

In step S 18, the password change module 14 sends the username and the hash value over the communication network 18 to the respective device 20. The access to the device 20 may be established via the method of Fig. 3. In particular, the access module 16 may send the hashed old password to the authentication module 22 of the device 20. In the end, the authentication module 22 receives the hash value.

Summarized, according to an embodiment of the invention, the hash value and/or the username is sent over the communication network 18 to the respective control device 20.

In step S20, the hash value is stored in the control device 20 by the authentication module 22. According to an embodiment of the invention, the hash value is stored with respect to the username in the control device as a user specific hash value.

The method of Fig. 2 may be used for adding or editing a new remote access or new local password. Two kinds of passwords may be distinguished by the method. Remote access passwords, which may be long and complex and which may be used for remote access to the device, i.e., via the communication network 18, and local passwords, which may be small and easy to enter and which may be used solely for the local HMI access, i.e., when the user is standing in front of the device 20. As will be explained later, it is possible that a remote access password cannot be used for local access and a local password cannot be used for remote access.

The differentiation between those two kinds of passwords may originate from the use profile of the control device 20. Usually, the local HMI 24 may only be used for local operation of the device 20, while the remote access may be also used for re-configuration of the device 20. The local operation itself may be neither automatable nor may be used for operating multiple devices 20 at the same time. Therefore the associated risk for the local passwords may be lower than the risk associated with the remote access password.

If a device 20 does not allow a local operation, no local passwords may be used for the respective device 20.

According to an embodiment of the invention, the new password is a remote access password or the new password is a local access password. In step S10, the type of the type of password may be entered by the user. In step S18, the type of password may be sent to the control device 20. In step S20, the type of password may be stored together with the hash value.

In steps S 14 and S16, the hash value $H_i$ may be calculated in the following way:

$$H_i = h \left( h \left( x \oplus n_i \right) \right)$$

Here, x is the new remote access user password and $n_i$ is the device identifier of device i. In step S14, the new password x and the device identifier $n_i$ are concatenated by the concatenation operation $\oplus$ to the device specific remote password $x \oplus n_i$. In step S16, the device specific remote password $x \oplus n_i$ is hashed twice by the hash function h to generate the device specific hash value $H_i$, which is the remote access authentication hash for the device i.

In general, a hash function is a mathematical one-way function $x \rightarrow y$ which takes an arbitrary value x as input (here a password), and computes an output y. A hash function may be defined by the fact that from the knowledge of the output y no conclusions for x can be drawn except of trying out all possible values. Examples for such hash functions are SHA (Secure Hash Algorithm) or Message-Digest algorithm 5 (MD-5).

In the variant for legacy control devices, in the steps S 14 and S16', the hash value $H_i$ may be calculated in the following way:

$$H_i = h \left( x \oplus n_i \right)$$

In step S16', the device specific remote password $x \oplus n_i$ is hashed only one time by the hash function h to generate the device specific hash value $H_i$

When changing a local password, which can only be used for local HMI access, the has value $L_i$ may be calculated in the following way:

$$L_i = h \left( l \oplus n_i \right) )$$

Here, l is the new local access user password and $n_i$ is the device identifier of device i. In step S 14, the new local password x and the device identifier $n_i$ are concatenated by the concatenation operation $\oplus$ to the device specific local password $l \oplus n_i$. In step S16', the device specific local password $l \oplus n_i$ is hashed twice by the hash function h to generate the device specific hash value $L_i$, which is local access authentication hash for the device i.

Summarized, the password change module 14 may generate the local and remote access authentication hashes $H_i$ and $L_i$ based on the input x and l, respectively, to be stored in the device.

According to the method of Fig. 2, a special way of ensuring individual remote and local access passwords for each device 20 is provided. However, the user only has to remember exactly one remote and local access password. This is achieved by the specially generated authentication hashes $H_i$, $L_i$ that differ for each device.

The following example shows how the method of Fig. 2 may calculate the device specific hash value for each device 20.

The user enters the new password "15fGSrs" into the password change module 14, which knows all devices 20a, 20b, 02c it is able to access (e.g. from the system configuration). The password change module 14 then computes an individual authentication hash for each device 20 in the way described above and stores it on the respective device 20. In particular, the password change module 14 concatenates the password with the device identifier, and then applies the hash function twice:

$$h(h(l5fGSrsE1Q1QA1)) = 0391fdc82\ldots$$

$$h(h(l5fGSrsE1Q1QA2)) = b35399bb\ldots$$

$$h(h(l5fGSrsE1Q1QA3)) = 9e5c564\ldots$$

In the example, the SHA-256 hash function is used. For example, the hash value for device 20a with identifier E1Q1QA1 starts with 0391fdc82, and this is sent to the device 20a.

Fig. 3 shows a flow diagram of a method for remotely accessing a control device.

In step S30 a user enters his username, a device identification and the remote access password into the remote system 12. The access module 16 receives the access password and the control device identification. The device identification may be an device name or may be the device identification.

According to an embodiment of the invention, a control device identifier for the control device may be determined from the control device identification. However, the control device identifier may also be the control device name. In other words, the control device identifier may be entered into the remote system 12 directly.

In step S32 the access module 16 concatenates the device identifier and the remote access password. According to an embodiment of the invention, the access password and the control device identifier are combined to a device specific access password. The concatenation is executed as explained with respect to step S14 of Fig. 2.

In step S34, the access module 16 calculates a hash value by applying a hash function one time on the device specific access password, for example as explained with respect to step S16' of Fig. 2. According to an embodiment of the invention, the device specific access password is hashed to an access hash value.

In step S36, the access module sends the username and the access hash value to the control device 20 that is specified by the control device name or the control device identifier. The access hash value is sent over the communication network 18 and is received by the authentication module 22.

According to an embodiment of the invention, the access hash value is sent to the control device 20 over the communication network.

According to an embodiment of the invention, the hash value is sent in an encrypted form over the communication network 18. In such a way, it may be very difficult to read the hash value out of the communication messages between the remote system 12 and the control device 20.

In step S38, the authentication module 22 hashes the received hash value for a second time. Alternatively in step S38', according to a variant of the method, the method does nothing and directly continues with step S40. Step 38 will be executed in devices 20 for which in step S16 of Fig. 2 the hash function has been applied twice to the device specific password. The reason for this will be explained below.

In step S40, the authentication module 22 determines the stored hashed value for the username, i.e. the hashed value that may have been stored during the execution of the method of Fig. 2. After that the authentication module 22 compares the hashed access hash value (step S38) or the access hash value (step S38') with the determined stored hash value.

According to an embodiment of the invention, the access hash value is compared with the hash value stored in the control device, wherein the access hash value may be either hashed for a second time at the control device and then compared with the stored hashed hash value or the access hash value received by the control device is directly compared with the stored hashed value.

In the end, the user is authenticated in the control device 20, if the access hash value and the stored hash value are equal.

The following example shows how the method of Fig. 3 may authenticate a user in a control device 20. In the present example, the device 20b to access has the identifier E1Q1QA2, and the user password for remote access is 15fGSrs.

First, the user specifies which device or set of devices he needs to access. For example, the user may specify the device 20b by entering the identifier E1Q1QA2. Furthermore, the user types his username and the corresponding password "15fGSrs " in the access module 16. The access module 16 translates that information into a hash value for the individual device by concatenating the password with the device identifier to access and computing the hash value h (15fGSrsE1Q1QA2), which starts with b4ece5f...

This hash value is then sent to the device 20b, which calculates the hash value of the received hash value that starts with b4ece5f (i.e. the concatenation of the password and device name is hashed twice). If this twice hashed value corresponds to the stored value, the user is authenticated and the access rights for that user are determined in order to proceed with the authorization.

Some control devices 20 may have an authentication module 22 that is adapted to execute the variant of the method of Fig. 3 with step S38'. The variant with step S38 may require a slight modification of the authentication module 22 of the control device 20. In this case, the variant of the method with step S38' may not require any changes to the existing authentication software of the control device 20. However, the variant with step S38 may require that the variant with step S16' is used for changing the password.

Thus, the variant with step S38' may be a variant for legacy devices. In this variant, only a one-time hashed value is stored on the control device 20. This hash value may be treated as the regular password for the user. The access module 16 submits the one-time hashed value (step S16') but the control device 20 does not compute the second hashed value. This variant may not require a change in the authentication process of the control device 20 but may still enable pass-the-hash kind of attacks, i.e. attacks in which the hash value is stolen and used directly to access the control device 20. For example, if the password storage of the device 20 is read by a hacker, the hacker may gain access to the compromised device 20. This will not be the case if the variant with steps S16, S38 is applied.

Fig. 4 shows a flow diagram of a method for locally accessing a control device 20.

Whenever a user has to access the device from the front panel user interface, he may be forced to use his local password instead of the remote password. In this case, the user must have specified a local password in advance, which may have been stored in the device 20 as described with respect to Fig. 2.

In step S50, the user enters his username and the local password in the HMI 24 of the control device 20. The authentication module 22 receives the local access password. After that the authentication module 22 determines the control device identifier of the control device.

In step S52, the authentication module 22 concatenates the local access password and the device identifier. According to an embodiment of the invention, in the control device the local access password and the control device identifier are combined to a device specific local access password.

In step S54, the authentication module 22 hashes the device specific local access password one time to a local access hash value.

In step S56, the authentication module 22 compares the local access hash value with the hash value stored for local access and stored for the username. The authentication module 22 authenticates the user, if the local access hash value and the stored hash value are equal.

Summarized, to access the device 20, the user must be physically present in front of the device and use the HMI 24 to enter the password. The device 20 then hashes the password and device name and compares the resulting hash with the stored local access hash value for the specified user. If those correspond, the user is authenticated and can locally operate the device 20.

It has to be noted that the device access module 16 is not associated with the local password 1 or the local authentication hash $L_i$.

Furthermore, in contrast to the remote access method of Fig. 3, the method of Fig. 4 does not prevent a device 20 that runs compromised software from collecting the local user password, as the user enters his password directly on the device 20. This limitation, however, is not the case for the remote access password, as only the device specific hash is submitted to the device 20 (step S18). Due to the limited capability of a local attack, i.e., it is neither automatable nor can be used to access multiple devices 20 at the same time, the limitation for the local access may be considered as a reasonable trade-off between security and usability.

Summarized, the proposed methods may require only a small change within the software that is used for device configuration, and - optionally - a small change in the authentication of the device. This change may require the use of a common hash algorithm, which depending on the chosen algorithm, may in most cases already be available as a software library. The proposed method may provide benefits in terms of better cyber security resilience against system compromise due to a single device being compromised (hacked or stolen).

The functional modules may be implemented as programmed software modules or procedures, respectively. However, one skilled in the art will understand that the functional modules may be implemented fully or partially in hardware.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

**Claims**

1. A method for securing an industrial control system (10), wherein the industrial control system comprises a plurality of control devices (20) interconnected by a communication network (18), wherein the method comprises:

    Receiving a new password entered into a password change module (14) connected to the communication network (18);
    Followed by, for each control device (20) of the plurality of control devices,
    Determining a control device identifier;
    Combining the new password and the control device identifier to a device specific password;
    Hashing the device specific password to generate a hash value;
    Sending the hash value to the control device (20) over the communication network (18); and
    Storing the hash value in the control device (20).

2. The method of claim 1, wherein the password and the control device identifier are combined by concatenating the password and the control device identifier

3. The method of claim 1 or 2, wherein the new password is a remote access password, and/or wherein the new password is a local access password.

4. The method of one of the preceding claims, wherein the control device identifier is unique with respect to the plurality of control devices (20).

5. The method of one of the preceding claims, further comprising the steps of:

    Receiving a username entered into the password change module (14);
    Sending the username to the control device (20);
    Storing the hash value as a user specific hash value with respect to the username in the control device (20).

6. The method of one of the preceding claims, wherein the device specific password is hashed twice to generate the hash value.

7. The method of claim 6, further comprising the steps of:

Receiving an access password and a control device identification entered into an access module (16) by a user;
Determining a control device identifier for the control device (20) from the control device identification;
Combining the access password and the control device identifier to a device specific access password;
Hashing the device specific access password to an access hash value;
Sending the access hash value to the control device (20) over the communication network (18);
Hashing the access hash value at the control device (20);
Comparing the hashed access hash value with the hash value stored in the control device (20);
Authenticating the user if the hashed access hash value and the stored hash value are equal.

8.  The method of claim 7,
wherein the access hash value is sent in an encrypted form over the communication network (18).

9.  The method of one of the preceding claims, wherein the method comprises the steps of:

Receiving a local access password entered into a human machine interface (24) of the control device (20);
Determining a control device identifier for the control device (20);
Combining, in the control device, the local access password and the control device identifier to a device specific local access password;
Hashing, in the control device, the device specific local access password to a local access hash value;
Comparing the local access hash value with the stored hash value;
Authenticating the user, if the local access hash value and the stored hash value are equal.

10. An industrial control system (10), comprising:

an access module (16);
a plurality of control devices (20);
wherein each of the control devices (20) is interconnected with the access module (16) by a communication network (18);
wherein the control devices (20) are adapted to hash an access hash value received from the access module (16) and to compare the hashed access hash value with a hash value stored in the control device (20).

Fig. 1

Fig. 2

S30

S32

S34

S36

S38        S38`

S40

Fig. 3

S50

S52

S54

S56

Fig. 4

Europäisches
Patentamt

European
Patent Office

Office européen
des brevets

## EUROPEAN SEARCH REPORT

Application Number

EP 11 17 0324

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 037 651 A1 (ABB TECHNOLOGY AG [CH]) 18 March 2009 (2009-03-18) <br> * paragraph [0008] * <br> * paragraph [0021] * <br> * paragraph [0024] * <br> ----- | 1-4,10 | INV. <br> H04L29/06 |
| X | US 2009/083843 A1 (WILKINSON JR JOHN C [US] ET AL) 26 March 2009 (2009-03-26) <br> * paragraph [0008] * <br> * paragraph [0027] * <br> * paragraph [0028] * <br> * paragraph [0038] * <br> ----- | 1-4,10 | |
| A | WO 01/67219 A1 (APRIL SYSTEM DESIGN INC [US]) 13 September 2001 (2001-09-13) <br> * page 2, line 1 - page 3, line 2 * <br> * page 3, line 21 - line 28 * <br> * page 7, line 22 - line 35 * <br> ----- | 1-10 | |

TECHNICAL FIELDS
SEARCHED (IPC)

H04L
G06F

The present search report has been drawn up for all claims

| Place of search | Date of completion of the search | Examiner |
|---|---|---|
| The Hague | 17 November 2011 | Lázaro, Marisa |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 11 17 0324

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2011

| Patent document cited in search report | | Publication date | Patent family member(s) | | Publication date |
|---|---|---|---|---|---|
| EP 2037651 | A1 | 18-03-2009 | CN<br>EP<br>EP<br>US<br>WO | 101803331 A<br>2037651 A1<br>2186298 A1<br>2010186075 A1<br>2009034018 A1 | 11-08-2010<br>18-03-2009<br>19-05-2010<br>22-07-2010<br>19-03-2009 |
| US 2009083843 | A1 | 26-03-2009 | NONE | | |
| WO 0167219 | A1 | 13-09-2001 | AU<br>US<br>WO | 4544801 A<br>6993658 B1<br>0167219 A1 | 17-09-2001<br>31-01-2006<br>13-09-2001 |

EPO FORM P0459

For more details about this annex : see Official Journal of the European Patent Office, No. 12/82